Europäisches Patentamt

European Patent Office

Office européen des brevets

(11) Veröffentlichungsnummer: **0 342 510**
**A1**

# EUROPÄISCHE PATENTANMELDUNG

(21) Anmeldenummer: 89108423.8

(51) Int. Cl.⁴: **H04J 3/16 , H04J 3/07**

(22) Anmeldetag: 10.05.89

(30) Priorität: 16.05.88 DE 3816641

(43) Veröffentlichungstag der Anmeldung:
**23.11.89 Patentblatt 89/47**

(84) Benannte Vertragsstaaten:
**AT BE CH DE ES FR GB GR IT LI NL SE**

(71) Anmelder: Siemens Aktiengesellschaft
**Wittelsbacherplatz 2**
**D-8000 München 2(DE)**

(72) Erfinder: Müller, Horst, Dipl.-Ing.
**Dammstrasse 11**
**D-8021 Hohenschäftlarn(DE)**

(54) Verfahren zum Einfügen von Nachrichten-Paketen Fester Länge in den Pulsrahmen eines digitalen Übertragungssystems.

(57) Der Erfindung liegt die Aufgabe zugrunde, paketierte Signale fester Länge über eine unter dem Schlagwort "network node interface (NNI)" bekanntgewordene Multiplexstruktur zu übertragen.

Die der Einfügung von Signalen geringerer Bitrate in den Pulsrahmen eines STM-1-Signals einer Bitrate von 155 520 kbit/s als Unterrahmen dienenden Container (C-4) werden in Blöcke (B1 - B65) für jeweils 36 byte unterteilt. Jeder Block enthält einen Blockkopf (BK) für eine Adresse und ein Datenfeld (DF) für die paketierten Nutzsignale. Weitere Containerarten werden in gleichlange Blöcke eingeteilt.

Die Erfindung erlaubt eine vorteilhafte Übertragung paketierter Signale über die Multiplexstrukturen NNI oder SONET.

## FIG 3

EP 0 342 510 A1

# Verfahren zum Einfügen von Nachrichten-Paketen fester Länge in den Pulsrahmen eines digitalen Übertragungssystems

Die Erfindung bezieht sich auf ein Verfahren zum sendeseitigen Einfügen von Nachrichten-Paketen fester Länge in den Pulsrahmen eines digitalen Übertragungssystems und zur empfangsseitigen Entnahme der Pakete aus diesem Pulsrahmen.

Aus der europäischen Patentschrift EP 0 108 028 B1 ist bereits ein Synchronisations-System für ein digitales Übertragungs-System mit einem in gleiche und sich wiederholende Zeitintervalle unterteilten Multiplex bekannt, wobei die zu übertragende Information in Pakete unterteilt ist. Ein weiteres Verfahren dieser Art ist Gegenstand eines älteren Vorschlags (P 37 35 377.2).

Aus der Zeitschrift "Telecommunications", März 1988, Seiten 63, 65 und 66 sind Multiplexstrukturen für internationalen Gebrauch bekannt, die synchrones optisches Netzwerk SONET und Netzwerkknoten-Schnittstelle NNI genannt werden. Diese Strukturen arbeiten mit einer Hierarchie von Digitalsignalen STM-1 mit einer Bitrate von 155 520 kbit/s und STM-4 mit einer Bitrate von 622 080 kbit/s sowie mit eventuell weiteren Digitalsignalen, wie STM-8, STM-12 und STM-16. Jedem dieser Digitalsignale ist ein Pulsrahmen zugeordnet. In den Pulsrahmen des Digitalsignals STM-1 lassen sich Digitalsignale geringerer Bitrate der europäischen, der japanischen oder der US-Hierarchie über Container genannte Unterrahmen einfügen.

Aufgabe der Erfindung ist es, für das Einfügen paketierter Signale in Container C-4, C-31 und C-32 der Multiplexstruktur NNI eine Lösung anzubieten.

Ausgehend von einem Verfahren der einleitend geschilderten Art wird diese Aufgabe erfindungsgemäß dadurch gelöst, daß als Pulsrahmen der Grundrahmen eines 155 520-kbit/s-Signals nach den CCITT-Empfehlungsentwürfen G.70X, G.70Y und G.70Z ausgewählt wird, der virtuelle Container aufnimmt, die jeweils aus einem oder mehreren Pfadkopfteilen und aus einem oder mehreren Containern mit 9 Reihen zu je 260, 64 oder 84 Zeitschlitzen zur Aufnahme einer entsprechenden Anzahl von Bytes bestehen, daß die Folge der Reihen des oder der Container für einen Grundrahmen in Blöcke einer Länge von 36 Zeitschlitzen unterteilt wird und daß die Pakete in diese Blöcke eingefügt bzw. aus diesen Blöcken entnommen werden.

Da eine definierte Anzahl von Paketen in einem Container untergebracht wird, ist keine zusätzliche Synchronisierung auf den Anfang der Pakete erforderlich, weil das erste Paket immer unmittelbar nach dem ersten Byte des entsprechenden Pfadkopfteils beginnt. Eine zusätzliche Synchronisierung auf den Anfang der Pakete, wie sie in der genannten Druckschrift beschrieben und in dem älteren Vorschlag ausgeführt ist, kann daher entfallen.

Die Wahl von 36 Zeitschlitzen pro Block ergibt in vorteilhafter Weise die gleiche Blocklänge für die genannten 3 Containerarten. In einem NNI-Pulsrahmen ist eine freizügige Mischung von paketierten Signalen und herkömmlichen Zeitmultiplexsignalen in getrennten virtuellen Containern möglich.

Jeder Block kann in vorteilhafter Weise in einen Blockkopf für 4 byte und ein Datenfeld für 32 byte unterteilt werden. Der Blockkopf kann eine Adresse enthalten.

Anhand von Ausführungsbeispielen wird die Erfindung nachstehend näher erläutert.

Fig. 1 zeigt einen Teil der NNI-Multiplexstruktur,

Fig. 2 zeigt einen STM-1-Pulsrahmen mit einem virtuellen Container VC-4,

Fig. 3 zeigt die erfindungsgemäße Einteilung des Containers C-4,

Fig. 4 zeigt einen STM-1-Pulsrahmen mit 4 virtuellen Containern VC-31,

Fig. 5 zeigt einen Container C-31 mit der erfindungsgemäßen Einteilung,

Fig. 6 zeigt einen STM-1-Pulsrahmen mit 3 virtuellen Containern VC-32 und

Fig. 7 zeigt einen Container C-32 mit der erfindungsgemäßen Einteilung.

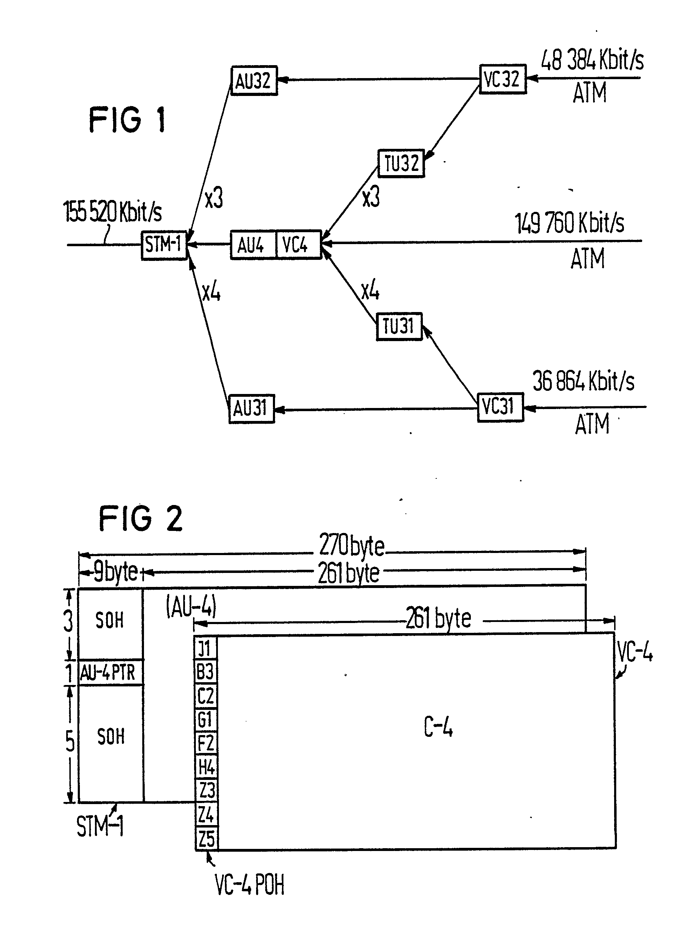

Fig. 1 zeigt den die Erfindung betreffenden Teil der NNI-Multiplexstruktur mit virtuellen Containern VC31, VC32 und VC4, Übertragungseinheiten (Transport Unit) TU31 und TU32, Verwaltungseinheiten (Administration Unit) AU31, AU32 und AU4 sowie einer Einheit zur Bildung eines STM-1-Signals. Den virtuellen Containern werden ATM-Signale (Asynchronous Transfer Mode) zugeführt.

Fig. 2 zeigt den Pulsrahmen des Digitalsignals STM-1 mit einem Kopfabschnitt (section overhead SOH), einer Verwaltungseinheit (Administration Unit AU-4) und einem Verwaltungseinheitszeiger (Administration Unit Pointer AU-4 PTR). Der Pulsrahmen besteht aus 9 Reihen, die aus Gründen der Platzersparnis nicht hintereinander, sondern untereinander angeordnet sind, und 270 Spalten, die jeweils 1 byte oder 8 bit pro Reihe umfassen. Der Kopfabschnitt (SOH) und der Verwaltungseinheitszeiger (AU-4 PTR) nehmen die ersten 9 Spalten ein.

In die Verwaltungseinheit (AU-4) werden virtuelle Container (VC-4) eingefügt, deren Anfang innerhalb der Verwaltungseinheit (AU-4) der Verwaltungseinheitszeiger (AU-4 PTR) angibt. Der virtuelle Container (VC-4) enthält die gleiche Reihen- und Spaltenzahl wie die Verwaltungseinheit (AU-4). Eine erste l-byte-breite Spalte dient der Aufnahme eines Pfadkopfteiles (Path Overhead POH) mit Bytes J1, B3, C2, G1, F2, H4, Z3, Z4 und Z5. An diese Spalte schließt sich ein Container C-4 für Nutzsignale an.

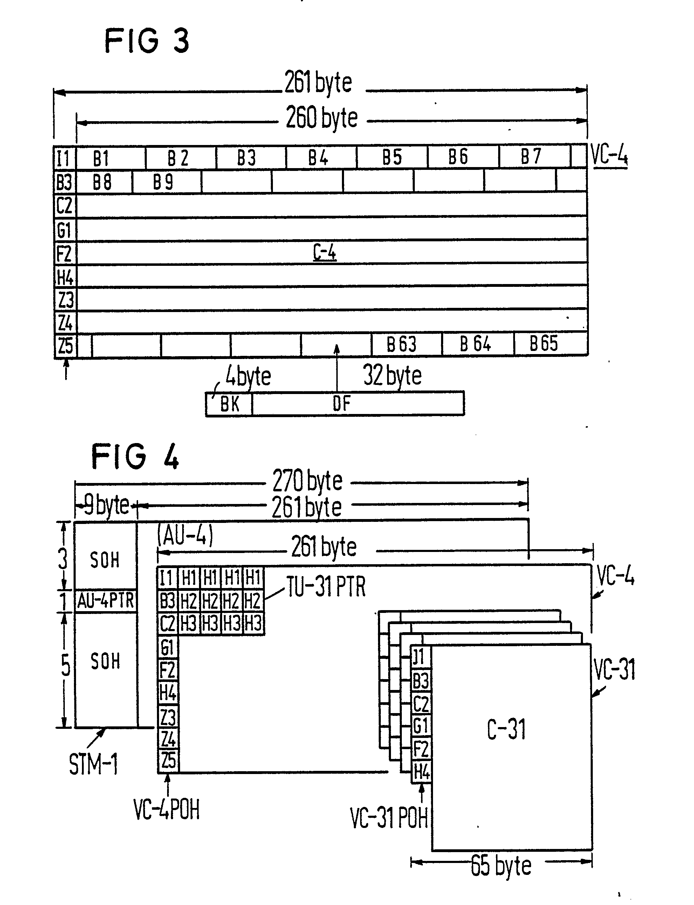

Fig. 3 zeigt den virtuellen Container VC-4 mit der erfindungsgemäßen Einteilung des Containers C-4. Dessen 9 Reihen sind mit Blöcken B1 - B65 ausgefüllt, die jeweils 36 byte bzw. 288 bit aufnehmen können. Eine Reihe kann mehr als 7 aber weniger als 8 Blöcke aufnehmen. Der Block B8 liegt daher teils in der ersten teils in der zweiten Reihe.

Jeder Block ist in einen Blockkopf BK für 4 byte und ein Datenfeld DF für 32 byte unterteilt, wie Fig. 3 unten zeigt.

Fig. 4 zeigt einen STM-1 Pulsrahmen und einen virtuellen Container VC-4 wie in Fig. 1. Der Container C-4 enthält jedoch links oben 12 Übertragungseinheitszeiger TU-31. Sein restlicher Raum wird mit 4 Pfadkopfteilen VC-31 POH und 4 Containern C-31 gefüllt.

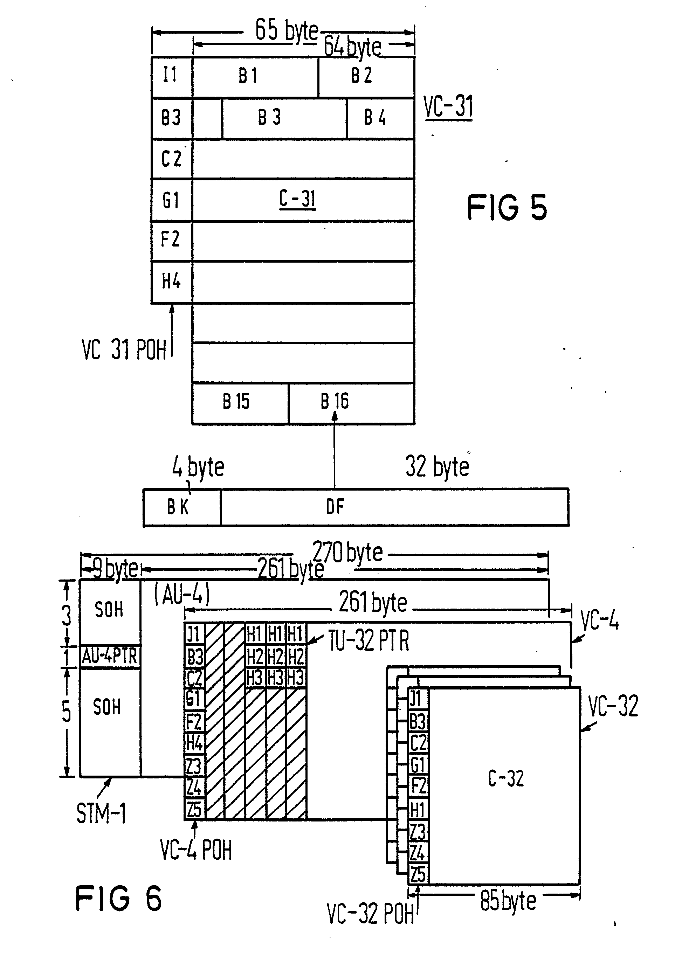

Fig. 5 zeigt einen virtuellen Container VC-31 mit einem Pfadkopfteil VC-31 POH und einem Container C-31. Letzterer ist in 16 Blöcke B1 - B16 eingeteilt. Jeder dieser Blöcke besteht wiederum aus einem Blockkopf BK und einen Datenfeld DF.

Derart eingeteilte Container C-31 können auch über 4 Verwaltungseinheiten AU- 31 in den Pulsrahmen des STM-1-Signals eingefügt werden.

Fig. 6 zeigt einen STM-1-Pulsrahmen und einen virtuellen Container VC-4 wie in den Figuren 2 und 4. Der Container C-4 enthält hier 9 byte für Übertragungseinheitszeiger TU-32 PTR und schraffiert dargestellte Bytes für eine feste Stopfung sowie 3 virtuelle Container VC-32 mit Pfadkopfteilen VC-32 POH und Containern C-32.

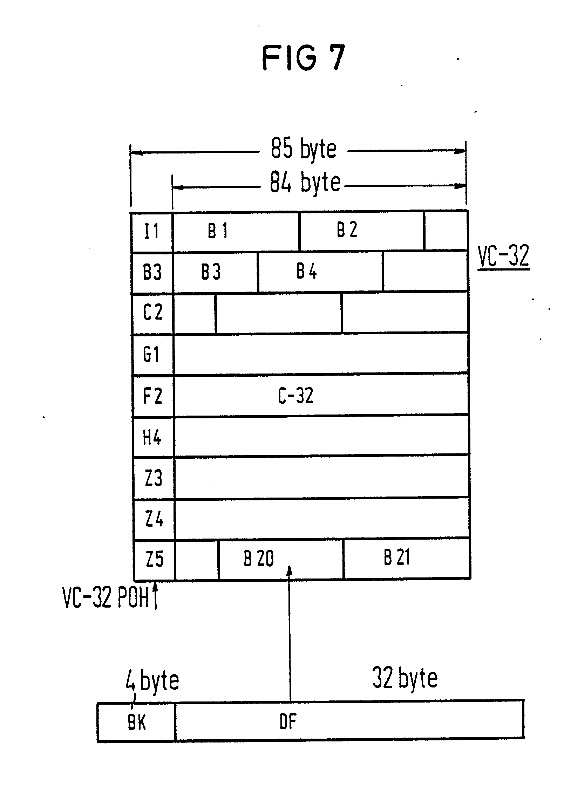

Fig. 7 zeigt einen virtuellen Container VC-32 mit einem Pfadkopfteil VC-32 POH und einem Container C-32. Dieser ist in 21 Blöcke B1 - B21 unterteilt, die auch hier jeweils aus einem Blockkopf BK und einem Datenfeld DF bestehen. Auch diese Container können über 3 Verwaltungseinheiten AU-32 in den Pulsrahmen des STM-1-Signals eingefügt werden.

**Ansprüche**

1. Verfahren zum sendeseitigen Einfügen von Nachrichten-Paketen fester Länge in den Pulsrahmen eines digitalen Übertragungssystems und zur empfangsseitigen Entnahme der Pakete aus diesem Pulsrahmen,
**dadurch gekennzeichnet,**
daß als Pulsrahmen der Grundrahmen eines 155 520-kbit/s-Signals (STM-1) nach den CCITT-Empfehlungsentwürfen G.70X, G.70Y und G.70Z ausgewählt wird, der virtuelle Container (VC-4; VC-31; VC-32) aufnimmt, die jeweils aus einem (VC-4 POH) oder mehreren (VC-31 POH; VC-32 POH) Pfadkopfteilen und aus einem (C-4) oder mehreren (C-31; C-32) Containern mit 9 Reihen zu je 260, 64 oder 84 Zeitschlitzen zur Aufnahme einer entsprechenden Anzahl von Bytes bestehen,
daß die Folge der Reihen des (C-4) oder der (C-31; C-32) Container für einen Grundrahmen in Blöcke (B1 - B65; B1 - B16; B1 - B21) einer Länge von 36 Zeitschlitzen unterteilt wird und daß die Pakete in diese Blöcke (B1 - B65; B1 - B16; B1 - B21) eingefügt bzw. aus diesen Blöcken entnommen werden.

2. Verfahren nach Anspruch 1,
**dadurch gekennzeichnet,**
daß jeder Block (B1 - B65; B1 - B16; B1 - B21) in einen Blockkopf (BK) für 4 byte und ein Datenfeld (DF) für 32 byte unterteilt wird.

3. Verfahren nach Anspruch 2,
**dadurch gekennzeichnet,**
daß in den Blockkopf (BK) eine Adresse eingegeben wird.

## FIG 1

## FIG 2

## FIG 3

|  | 261 byte | | | | | | | |
| --- | --- | --- | --- | --- | --- | --- | --- | --- |
|  | 260 byte | | | | | | | |
| I1 | B1 | B 2 | B3 | B4 | B5 | B6 | B7 | VC-4 |
| B3 | B8 | B9 | | | | | | |
| C2 | | | | | | | | |
| G1 | | | | | | | | |
| F2 | | | C-4 | | | | | |
| H4 | | | | | | | | |
| Z3 | | | | | | | | |
| Z4 | | | | | | | | |
| Z5 | | | | | B 63 | B 64 | B 65 | |

4 byte     32 byte

| BK | DF |
| --- | --- |

## FIG 4

270 byte
9 byte — 261 byte
(AU-4) — 261 byte

| | | | | | |
| --- | --- | --- | --- | --- | --- |
| 3 | SOH | | | | |
| 1 | AU-4 PTR | | | | |
| 5 | SOH | | | | |

| I1 | H1 | H1 | H1 | H1 | — TU-31 PTR |
| B3 | H2 | H2 | H2 | H2 | |
| C2 | H3 | H3 | H3 | H3 | |
| G1 | | | | | VC-4 |
| F2 | | | | | |
| H4 | | | | | |
| Z3 | | | | | |
| Z4 | | | | | |
| Z5 | | | | | |

VC-31

| J1 | |
| B3 | |
| C2 | |
| G1 | C-31 |
| F2 | |
| H4 | |

STM-1

VC-4 POH

VC-31 POH

65 byte

FIG 5

| I1 | B 1 | B 2 |
|----|-----|-----|
| B3 | B 3 | B 4 |
| C 2 | | |
| G1 | C - 31 | |
| F2 | | |
| H4 | | |

VC-31

65 byte
64 byte

VC 31 POH

| B 15 | B 16 |
|------|------|

4 byte · · · · · · 32 byte

| B K | DF |
|-----|----|

FIG 6

270 byte
9 byte ← 261 byte

| SOH | (AU-4) | | TU-32 PTR | VC-4 |
| AU-4PTR | J1 B3 C2 G1 F2 H4 Z3 Z4 Z5 | H1 H1 H1 / H2 H2 H2 / H3 H3 H3 / | | |
| SOH | | | | |

261 byte

VC-32

| J1 B3 C2 G1 F2 H1 Z3 Z4 Z5 | C - 32 |

STM-1

VC-4 POH

VC-32 POH    85 byte

# FIG 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | ANT NACHRICHTENTECHNISCHE BERICHTE, Nr. 4, Mai 1987, Seiten 92-101, Backnang, DE; L. GOHM et al.: "Auf dem Wege zu einem universellen Kommunikationsnetz" * Seite 97, Figur 4 * | 1 | H 04 J 3/16 H 04 J 3/07 |
| A | DATA COMMUNICATIONS, Band 16, Nr. 13, Dezember 1987, Seiten 64,66,68, New York, US; P. HEYWOOD et al.: "U.S. forging ahead with Sonet despite B-ISDN standard setback" * Seite 64, Figur * | 1 | |
| A | INTERNATIONAL SWITCHING SYMPOSIUM 1987, Innovations in Switching Technology, Phoenix, Arizona, 15.-20. März 1987, Seiten 789-793, IEEE, New York, US; W. THOMA et al.: "Subscriber loop in the broadband ISDN" * Seite 791, Absatz 7; Seite 793, Figur 6 * | 1 | RECHERCHIERTE SACHGEBIETE (Int. Cl.4) |
| D,A | EP-A-0 108 028 (SERVEL et al.) * Seite 3, Zeile 21 - Seite 4, Zeile 28 * | 2 | H 04 J H 04 Q |

Der vorliegende Recherchenbericht wurde für alle Patentansprüche erstellt

| Recherchenort | Abschlußdatum der Recherche | Prüfer |
|---|---|---|
| DEN HAAG | 17-08-1989 | VAN DEN BERG,J.G.J. |